Europäisches Patentamt

European Patent Office

Office européen des brevets

(19)

(11) Veröffentlichungsnummer: **0 213 218**
**B1**

# (12) EUROPÄISCHE PATENTSCHRIFT

(45) Veröffentlichungstag der Patentschrift:
**05.10.88**

(21) Anmeldenummer: **85110723.5**

(22) Anmeldetag: **27.08.85**

(51) Int. Cl.⁴: **B 23 B 31/00**

(54) Verfahren zur Regelung der Spannkraft an umlaufenden Spanneinrichtungen von Werkzeugmaschinen.

(43) Veröffentlichungstag der Anmeldung:
**11.03.87 Patentblatt 87/11**

(45) Bekanntmachung des Hinweises auf die Patenterteilung:
**05.10.88 Patentblatt 88/40**

(84) Benannte Vertragsstaaten:
**AT CH DE FR GB IT LI NL SE**

(56) Entgegenhaltungen:
**FR - A - 2 407 043**

**PATENTS ABSTRACTS OF JAPAN, Band 9, Nr. 103
(M-377) [1826], 8. May 1985**

(73) Patentinhaber: **Paul Forkardt GmbH & Co. KG,
Rosenstrasse 44-46, D-4000 Düsseldorf 1 (DE)**

(72) Erfinder: **Bongartz, Bert, Dr., Am Rittersberg 6,
D-4000 Düsseldorf (DE)**
Erfinder: **Steinberger, Josef, Sebastiansweg 30,
D-4000 Düsseldorf (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

## Beschreibung

Die Erfindung betrifft ein Verfahren zur Regelung der Spannkraft an umlaufenden Spanneinrichtungen von Werkzeugmaschinen mit mehreren Spannelementen, die von einem Spannkrafterzeuger mit über ein Stellglied veränderlicher Kraftabgabe über Getriebeelemente betätigbar sind, welche beim Aufbau und Abbau der Spannkraft unterschiedlichen Kennlinien folgen (Hysterese), und mit mindestens einem in der Spanneinrichtung angeordneten Messelement zur Ermittlung der jeweiligen, auf die Werkstücke durch die Spannelemente ausgeübten Spannkraft, wobei der Messwert mittels einer Signalübertragung aus der Spanneinrichtung auf die Regeleinrichtung übertragbar ist.

Auf die Spannelemente umlaufender Spanneinrichtungen wirken mit steigender Drehzahl ansteigende Fliehkräfte, die sich spannkraftmindernd auswirken. Um auch bei hohen Drehzahlen eine ausreichende Spannkraft sicherzustellen, wird bereits während des Stillstandes der Spanneinrichtung eine so hohe Spannkraft erzeugt, dass trotz der Kraftminderung durch die Fliehkräfte bei hohen Betriebsdrehzahlen ein ausreichender Rest an Spannkraft übrigbleibt.

Eine derartige Überhöhung der Spannkraft im Stillstand der Spanneinrichtung birgt die Gefahr unerwünschter Verformungen des eingespannten Werkstückes in sich, insbesondere wenn es sich um verformungsempfindliche Werkstücke, wie beispielsweise dünnwandige Ringe handelt. Bei derartigen verformungsempfindlichen Werkstücken ist es deshalb häufig notwendig, die im Stillstand des Spannfutters aufgebrachte Spannkraft herabzusetzen, wodurch die Gefahr besteht, dass die Spannkraft bei hohen Betriebsdrehzahlen in einem unzulässig grossen Mass vermindert wird und zu einer hohen Unfallgefahr führt.

Um diese Nachteile der bekannten Spanneinrichtungen zu vermeiden, ist es seit langem bekannt, Spannfutter mit Ausgleichsgewichten zu versehen, die beispielsweise über ein Hebelsystem jeder Spannbacke zugeordnet sind und die die Fliehkraft in gewissem Masse kompensieren. Spannfutter dieser Art sind jedoch wegen der zusätzlichen Ausgleichsgewichte nicht nur kompliziert im Aufbau, teuer in der Fertigung, reparaturanfällig und beanspruchen einen verhältnismässig grossen Raum, sondern haben den entscheidenden Nachteil, dass die Backenausrüstung und die Fliehkraftgewichte aufeinander abgestimmt werden müssen. Da bei den modernen Werkzeugmaschinen die Spannbacken dem jeweiligen Werkstück angepasst werden, lassen sich derartige Fliehkraftausgleichsfutter nicht universell einsetzen, weil in der Praxis ein Auswechseln der Ausgleichsgewichte zu zeitaufwendig wäre.

Um diese Nachteile zu vermeiden, ist aus der DE-PS 2 150 885 ein kraftbetätigtes Spannfutter bekannt, bei dem die Spannkraft in Abhängigkeit von der auf die Spannelemente des Spannfutters in Abhängigkeit von der Drehzahl entstehenden Fliehkraft steuerbar ist. Die Steuerung erfolgte durch einen proportional zur Drehzahl des Spannfutters umlaufenden Drehzahlgeber, der über eine Steuereinheit eine Druckänderung bewirkt.

Der Nachteil dieser bekannten Konstruktion besteht darin, dass bei der Änderung des Druckes im Krafterzeuger weder der Schmierzustand des Spannfutters, noch die Steifigkeit von Spannfutter und jeweiligem Werkstück berücksichtigt werden. Diese Randbedingungen können den tatsächlichen Spannkraftverlauf so entscheidend beeinflussen, dass die voraus ermittelten Ergebnisse entscheidend vom tatsächlichen Spannkraftverlauf abweichen, weil nicht der tatsächliche Spannkraftverlauf, sondern nur die in das Spannfutter eingehende Kraft verändert wird. Bei der fortschreitenden Verfeinerung der Bearbeitungstechnik ist die bekannte Konstruktion nicht mehr ausreichend.

Aus der DE-PS 2 557 470 ist weiterhin ein Verfahren zum unterschiedlichen hydraulischen Spannen von Werkstücken in kraftbetätigten Spannzeugen bekannt, in denen das Werkstück in einer Einspannung einer Schruppbearbeitung bei maximaler Spannkraft und einer Schlichtbearbeitung bei verminderter Spannkraft unterworfen wird. Die Spannkraft wird hierbei durch einen druckmittelbetätigten Zylinder erzeugt, über Keilflächen auf die Spannelemente übertragen und zwischen Schrupp- und Schlichtbearbeitung ohne Ausspannen des Werkstückes allein durch Spanndruckverminderung im Druckmittelzylinder herabgesetzt.

Bei derartigen Spannzeugen, bei denen die durch einen druckmittelbetätigbaren Zylinder erzeugte Spannkraft über Keilflächen auf die Spannelemente übertragen wird, tritt durch unvermeidbares Verklemmen der Übertragungsglieder infolge von Verformungen der bewegten Teile zusätzlich zum Reibungsanteil eine Art Selbsthemmung ein, obwohl bei den in der Praxis verwendeten Spannzeugen mit Keilantrieb der Keilwinkel 15 - 20° beträgt und damit grösser als der bei etwa 6° liegende Reibungswinkel ist. Bei einer Druckabsenkung von einem höheren Druck zum Zwecke der Durchführung der Schruppbearbeitung auf einen niedrigeren Druck zum Zwecke der Schlichtbearbeitung bleibt deshalb bei den bekannten Spannfuttern mit Keilantrieb trotz der Druckabsenkung die dem hohen Druck entsprechende Spannkraft auf das Werkstück wirksam.

Um diese Nachteile zu vermeiden, wird bei dem bekannten Verfahren nach Beendigung der Schruppbearbeitung der Spanndruck im Zylinder kontrolliert unter den die Selbsthemmung der beweglichen Spannzeugelemente aufrechterhaltenden Wert abgesenkt, die Druckverminderung jedoch oberhalb des für die Haltekraft erforderlichen Wertes beendet, bevor anschliessend der für die Schlichtbearbeitung gewählte Spanndruck aufgebaut wird.

Auch bei diesem bekannten Verfahren zur Überwindung der Hysterese von Spannzeugen kann trotz der kontrollierten Druckabsenkung nicht sichergestellt werden, dass die Spanndruckänderungen im Druckmittelzylinder zu entsprechenden Reaktionen im eigentlichen Spannzeug führen. Schwierigkeiten ergeben sich insbesondere bei einer Nichtbeachtung des Schmierzustandes des Futters und der Steifigkeit von Werkstück und Spanneinrichtung.

Diese Schwierigkeiten, die dadurch entstehen, dass anstelle der zu beeinflussenden Spannkraft der Druck im Spannkrafterzeuger als Regelgrösse herangezogen worden ist, sollen mit einem kraftbetätigten Spannfutter nach der EP-OS 108 857 vermieden werden. Bei diesem Spannfutter ist mindestens ein Spannkraftaufnehmer in den Spannbacken angeordnet, der ständig, d.h. auch bei umlaufender Spindel die jeweilige Spannkraft ermittelt, wobei die Messwerte über einen mit dem Spannfutter umlaufenden Sender und einen stationären Empfänger übertragen und bei Bedarf zur Beeinflussung des Axialkrafterzeugers verwendet werden.

Ausser den konstruktiven Merkmalen und der Möglichkeit, mit Hilfe dieser Konstruktionselemente die mit dem Spannkraftaufnehmer gemessene tatsächliche Spannkraft zu verändern, enthält die EP-OS 108 857 keine Hinweise darauf, wie eine Einrichtung zur Regelung der Spannkraft auszubilden ist, um die gewünschte Beeinflussung der Spannkraft in der Praxis zu erzielen, insbesondere unter Berücksichtigung der bei Spanneinrichtungen vorhandenen Eigenschaften, wie Reibung und Hysterese. Wegen dieser Eigenschaften sind die bekannten Regelungssysteme, die einen reibungslosen Zustand voraussetzen, nicht anwendbar.

Der Erfindung liegt die Aufgabe zugrunde, ein Verfahren zur Regelung der Spannkraft an umlaufenden Spanneinrichtungen der eingangs genannten Art zu schaffen, die die Besonderheiten der Spanneinrichtungen, wie insbesondere das Auftreten von Reibung und Hysterese, berücksichtigt und nicht nur ein Konstanthalten der Spannkraft unabhängig von der jeweiligen Drehzahl gewährleistet, sondern auch eine Spannkraftänderung entsprechend dem Bearbeitungsprogramm der Werkzeugmaschine innerhalb kürzester Zeit ermöglicht.

Diese Aufgabe wird durch das oben genannte Verfahren gelöst, wobei in einem elektronischen Regelgerät ein Sollwert für die Spannkraft und jeweils eine interne Toleranzvorgabe für einen oberen und einen unteren Regelungssollwert vorgegeben werden und regelmässig ein Istwert-Sollwert-Vergleich durchgeführt wird, wobei in dem Regelgerät weiterhin für die Veränderung der Kraftabgabe des Spannkrafterzeugers durch das Stellglied eine der Kraftabgabe voreilende Stellgrösse digital erzeugt wird, deren Sprünge bei grosser Abweichung des Istwertes vom Sollwert gross und bei kleiner Abweichung klein sind und die bei Erreichen des Sollwertes der Spannkraft durch den Istwert um einen vorgegebenen Betrag vermindert wird, so dass der Istwert der Spannkraft in vorgegebenen Abständen regelmässig durch die Stellgrössenverminderung unter den Sollwert abgesenkt und regelmässig wieder von unten auf den Sollwert erhöht wird, und wobei bei einem Anstieg des Istwertes der Spannkraft auf einen von der oberen Toleranzvorgabe vorgegebenen Wert die Stellgrösse zum Zwecke der Absenkung der Spannkraft und zur Überwindung der Hysterese so lange unter Vorgabe der unteren Toleranzvorgabe als neuer Sollwert abgesenkt wird, bis der Istwert der Spannkraft auf einen Wert zwischen dem jeweiligen Sollwert und der unteren Sollwertvorgabe gefallen ist, wonach die Stellgrösse wieder bis zur Erreichung des Sollwertes durch den Istwert erhöht und regelmässig durch die Stellgrössenverminderung abgesenkt wird.

Bei der Erfindung wird für das jeweilige Werkstück diejenige Spannkraft vorgegeben, die für den ersten Bearbeitungsvorgang erforderlich ist. Der Spannkrafterzeuger wird zu diesem Zweck so lange zur Abgabe einer Kraft veranlasst bis der eingestellte Sollwert der Spannkraft erreicht ist. Es wird somit nicht mehr ein der gewünschten Spannkraft theoretisch entsprechender Sollwert z.B. des Druckes im Spannkrafterzeuger angestrebt, sondern der tatsächliche Spannkraftwert.

Da mit dem Anlaufen der Spanneinrichtung deren Spannelemente der Fliehkraft ausgesetzt werden, wodurch sich die Spannkraft vermindern würde, bewirkt die Erfindung eine Erhöhung der vom Spannkrafterzeuger auf die Spanneinrichtung ausgeübten Kraft, um den durch die Fliehkraft erzeugten Spannkraftverlust auszugleichen. Um hierbei ein Übersteigen des Spannkraft-Sollwertes zu vermeiden, wird — ebenso wie beim Aufbau der Spannkraft im Stillstand — eine der Kraftabgabe voreilende Stellgrösse digital erzeugt, deren Sprünge bei grosser Abweichung des Istwertes vom Sollwert grösser und bei kleiner Abweichung kleiner sind, so dass trotz der Vermeidung eines Übersteigens ein schnelles Anpassen erzielt wird. Ein Übersteigen des Sollwertes, wie es bei normalen Regelsystemen bekannt ist, hätte infolge der Selbsthemmung der Spanneinrichtung ein Beibehalten des überhöhten Spannkraftwertes zur Folge. Da erfindungsgemäss bei Erreichen des Sollwertes der Spannkraft durch den Istwert die Stellgrösse um einen vorgegebenen Betrag vermindert wird, wird regelmässig der Istwert der Spannkraft in vorgegebenen Abständen durch die Stellgrössenverminderung unter den Sollwert abgesenkt, so dass der Istwert der Spannkraft ständig innerhalb der vorgegebenen Toleranz und unabhängig von der Drehzahl dem Sollwert von unten angeglichen wird.

Bei einem Anstieg des Istwertes der Spannkraft, insbesondere durch Absenken der Drehzahl und damit Verminderung der Fliehkraft, auf einen von der oberen Toleranzvorgabe vorgegebenen Wert wird die Stellgrösse zum Zwecke der Absenkung der Spannkraft und zur Überwindung der Hysterese gemäss der Erfindung so lange unter Vorgabe der unteren Toleranzvorgabe als neuer Sollwert abgesenkt, bis der Istwert der Spannkraft auf einen Wert zwischen dem jeweiligen Sollwert und der unteren Sollwertvorgabe gefallen ist. Hierdurch wird die Selbsthemmung (Hysterese) überwunden. Es ist mit dem erfindungsgemässen Verfahren somit möglich, die tatsächliche Spannkraft auch bei einem Drehzahlabfall, der infolge abnehmender Fliehkraft zu einer Spannkrafterhöhung führen würde, konstant zu halten und die Spannkraft insbesondere für die Durchführung einer weiteren Bearbeitungsaufgabe gezielt auf einen neuen, niedrigeren Wert abzusenken.

Mit dem erfindungsgemässen Verfahren ist es erstmals möglich, die tatsächliche Spannkraft zum Einspannen eines bestimmten Werkstückes jeweils der optimalen Einspannkraft für die jeweilige Bearbeitungsaufgabe anzupassen und diese Sollwerte im Programm der Werkzeugmaschine abzuspeichern, aus dem sie zeitgerecht zur Veränderung des Sollwertes für die Spanneinrichtung abgerufen werden.

Auf der Zeichnung ist ein Ausführungsbeispiel einer Einrichtung zur Durchführung des erfindungsgemässen Verfahrens dargestellt, und zwar zeigen:

Fig. 1 eine schematische Darstellung einer an der Spindel einer Werkzeugmaschine angeordneten Spanneinrichtung mit einer Einrichtung zur Regelung der Spannkraft,

Fig. 2 ein Ablaufdiagramm eines Spannvorganges und

Fig. 3 ein weiteres Diagramm, das die Zusammenhänge zwischen Spannkraft und Axialkraft bei einer Verringerung der Spannkraft zeigt.

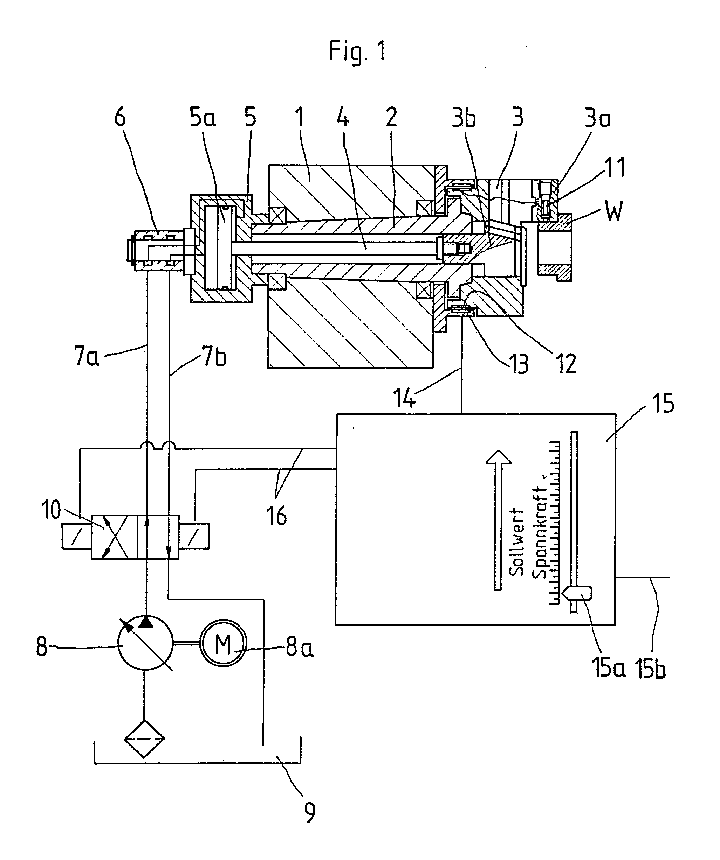

In Fig. 1 ist eine in einem Spindelgehäuse 1 einer im übrigen nicht dargestellten Werkzeugmaschine drehbar gelagerte Spindel 2 zu erkennen, an deren vorderem Flansch ein Spannfutter 3 angeordnet ist. Die Spannbacken 3a des Spannfutters 3 werden in radialer Richtung durch einen Futterkolben 3b betätigt, der über geneigte Keilflächen mit den Spannbacken 3a zusammenwirkt. Der Futterkolben 3b steht über eine Stange 4 mit dem Kolben 5a eines Spannkrafterzeugers 5 in Verbindung, der beim Ausführungsbeispiel als Druckmittelzylinder ausgeführt ist, jedoch auch als elektro-mechanischer Spannkrafterzeuger ausgeführt sein kann. Das Druckmittel für den Spannkrafterzeuger 5 wird über ein Druckmittelüberleitungsgehäuse 6 zugeführt, das über zwei Druckmittelleitungen 7a, 7b mit einer von einem Motor 8a angetriebenen Pumpe 8 bzw. einem Druckmittelvorratsbehälter 9 verbunden ist.

Zum Einspannen des in Fig. 1 eingezeichneten Werkstückes W wird die stangenseitige Fläche des Kolbens 5a des Spannkrafterzeugers 5 mit Druckmittel beaufschlagt, indem ein Servoventil 10 in den beiden Druckmittelleitungen 7a und 7b entsprechend angesteuert wird und diese Seite des Kolbens 5a mit der Pumpe 8 verbindet. Zur Freigabe des fertig bearbeiteten Werkstückes W wird dieses Servoventil 10 umgesteuert, so dass in diesem Fall der gegenüberliegende Druckraum mit der Pumpe 8 verbunden wird.

Das Servoventil 10 dient auch zur Veränderung des Druckes in dem zur Erzeugung der Spannkraft dienenden Druckraum des Spannkrafterzeugers 5, um die jeweils gewünschte Spannkraft zu erhalten, die von den Spannbacken 3a des Spannfutters 3 auf das Werkstück W ausgeübt wird. Zur Ermittlung dieser jeweiligen Spannkraft ist das Spannfutter 3 mit einem Messelement 11 ausgestattet, dessen Messleitungen zu einem im Futterkörper angeordneten Sender 12 führen. Von diesem Sender 12 werden die Messwerte berührungslos auf einen stationären Empfänger 13 übertragen, der über eine Signalleitung 14 mit einem elektronischen Regelgerät 15 in Verbindung steht. Dieses Regelgerät 15 ist über Steuerleitungen 16 mit dem Servoventil 10 verbunden.

Im Regelgerät 15 ist ein Sollwertsteller 15a enthalten, durch den die gewünschte Spannkraft entsprechend der jeweiligen Bearbeitungsaufgabe eingestellt wird. Der Sollwertsteller 15a wird intern vorzugsweise vom Programm der Werkzeugmaschine betätigt, wie durch die Verbindungsleitung 15b angedeutet ist.

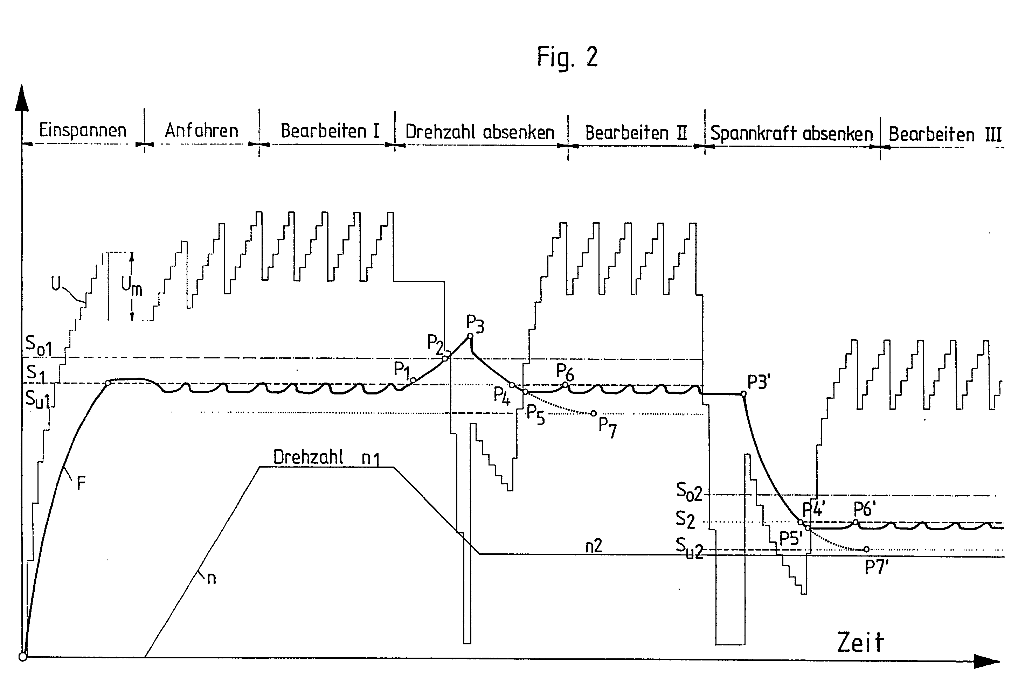

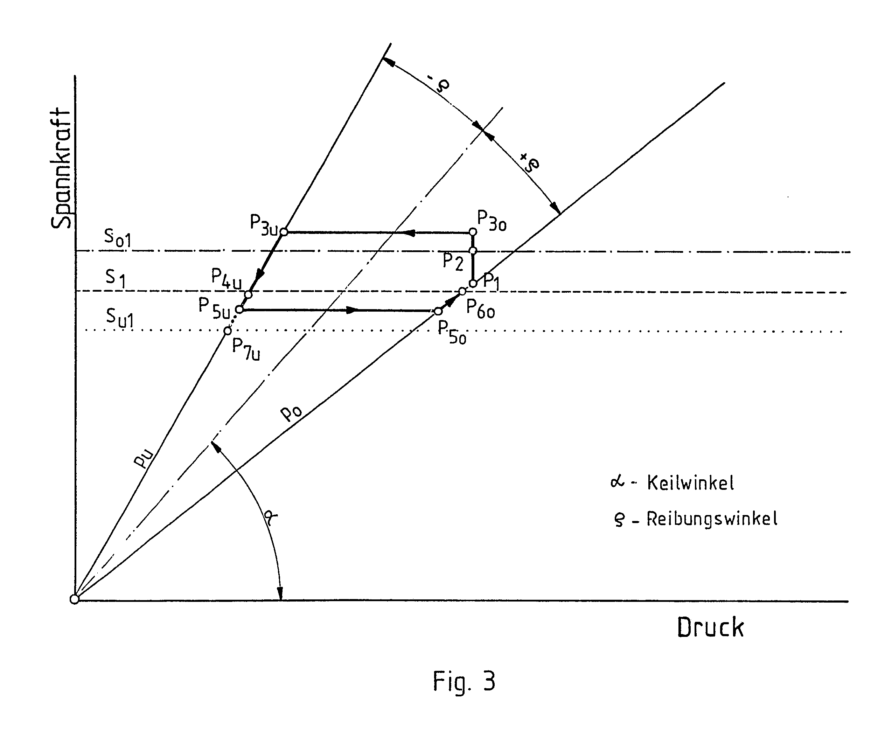

Die Vorgänge zur Regelung der Spannkraft des umlaufenden Spannfutters 3 anhand der in Fig. 1 dargestellten Einrichtung sollen nachfolgend mit Hilfe der Fig. 2 und 3 beschrieben werden.

Das in Fig. 2 dargestellte Diagramm zeigt den zeitlichen Ablauf der Spannkraft F, der Drehzahl n und einer Stellgrösse U, und zwar beim Einspannen und Bearbeiten eines Werkstückes. Der Zeitablauf umfasst das Einspannen dieses Werkstückes, das Anfahren der Werkzeugmaschine, einen ersten Bearbeitungsvorgang, eine Absenkung der Drehzahl, einen anschliessenden zweiten Bearbeitungsvorgang mit verminderter Drehzahl, einer Absenkung der Spannkraft bei gleichbleibender Drehzahl und einer dritten Bearbeitung des Werkstückes bei dieser abgesenkten Drehzahl.

Zum Einspannen des Werkstückes W in den Spannbacken 3a des nicht umlaufenden Spannfutters 3 wird ein Sollwert $S_1$ für die Spannkraft F vorgegeben, der der Haltekraft für die erste Bearbeitungsaufgabe entspricht, ohne dass hierbei der Spannkraftverlust infolge der Fliehkraft berücksichtigt werden muss. Der Sollwert $S_1$ ist mit gestrichelten Linien in Fig. 2 eingetragen. Diesem Sollwert $S_1$ sind interne Toleranzvorgaben für einen oberen Regelsollwert $S_{o1}$ und einen unteren Regelsollwert $S_{u1}$ zugeordnet. Diese sind strichpunktiert bzw. punktiert in Fig. 2 eingetragen.

Das Regelgerät 15 gibt die voreilende Stellgrösse U aus und prüft gleichzeitig den Unterschied zwischen Soll- und Istwert der mit dem Masselement 11 gemessenen Spannkraft F. Die Veränderung der Stellgrösse U erfolgt in Sprüngen, die bei grosser Abweichung des Istwertes vom Sollwert gross und bei kleiner Abweichung klein sind, wie dies das Diagramm in Fig. 2 zeigt.

Mit Hilfe der voreilenden Stellgrösse U wird im Stillstand des Spannfutters 3 die Spannkraft F degressiv erhöht bis der Sollwert $S_1$ erreicht ist. Bei Erreichen des Sollwertes $S_1$ wird die Stellgrösse U um einen vorgegebenen Betrag $U_m$ vermindert, der ebenfalls im Diagramm der Fig. 2 eingetragen ist. Hierdurch erfolgt ein geringfügiges Absenken der Spannkraft F, die jedoch stets oberhalb des unteren Regelsollwertes $S_{u1}$ bleibt.

Da somit der Sollwert $S_1$ der Spannkraft F erreicht worden ist, kann nunmehr die Spindel 2 mit dem Spannfutter 3 in Umdrehung versetzt werden. Während des in Fig. 2 auf den Einspannvorgang folgenden Anfahrens erhöht sich die Drehzahl n bis die vorgegebene Drehzahl n1 für den ersten Bearbeitungsvorgang erreicht ist. Während dieses Anfahrvorganges ergibt sich eine Verminderung der mit dem Messelement 11 gemessenen Spannkraft F infolge der auf die Spannbacken 3a wirkenden Fliehkraft. Das Regelgerät 15 gibt demgemäss über die Steuerleitung 16 dem Servoventil 10 den Befehl, den Druck für den Spannkrafterzeuger 5 so lange zu erhöhen, bis der Sollwert $S_1$ wieder erreicht ist. Die Druckerhöhung erfolgt wiederum mit Hilfe der Stellgrösse U, die jeweils bei Erreichen des Sollwertes $S_1$ um den Betrag $U_m$ vermindert wird, wodurch ein Übersteigen des Sollwertes $S_1$ der Spannkraft F verhindert wird. Aufgrund der voranstehenden Regelung bleibt die Spannkraft F auch im Anfahrbereich trotz steigender Drehzahl n innerhalb des Toleranzbereiches.

Damit sind die Voraussetzungen für den Beginn des ersten Bearbeitungsvorganges geschaffen. Auch während dieser Bearbeitung wird die Spannkraft F fortlaufend überwacht, wobei der Istwert der Spannkraft F in vorgegebenen Abständen regelmässig durch die Stellgrössenverminderung $U_m$ unter den Sollwert $S_1$ abgesenkt und regelmässig wieder von unten auf diesen Sollwert $S_1$ erhöht wird.

Bei dem in Fig. 2 dargestellten Bearbeitungsbeispiel soll nunmehr die Drehzahl n für den zweiten Bearbeitungsvorgang abgesenkt werden, wobei dieser zweite Bearbeitungsvorgang jedoch mit derselben Spannkraft F durchgeführt werden soll. Am Schluss der ersten Bearbeitungsaufgabe erfolgt demgemäss eine Absenkung der Drehzahl n vom Wert n1 auf den Wert n2. Während dieser Drehzahlabsenkung verringert sich der Fliehkrafteinfluss auf die Spannbacken 3a, so dass die Spannkraft F vom Punkt $P_1$ auf den Punkt $P_2$ zu steigen beginnt. Dementsprechend wird vom Regelgerät 15 die Stellgrösse U in grossen Sprüngen abgesenkt. Dennoch steigt die Spannkraft F kurzzeitig auf den Punkt $P_3$. Um die Spannkraft von diesem Wert auf den Punkt $P_4$, der dem Sollwert $S_1$ entspricht, abzusenken, muss gemäss dem Diagramm in Fig. 3 die Selbsthemmung (Hysterese) des Spannfutters 3 überwunden werden.

Die Fig. 3 zeigt den Spannkraftverlauf in Abhängigkeit vom Druck bei der Absenkung der Drehzahl, wobei die entsprechenden Punkte des Diagramms nach Fig. 2 im Diagramm nach Fig. 3 eingetragen sind. Es ist zu erkennen, dass durch die Drehzahlabsenkung die Spannkraft bei gleichbleibendem Druck von $P_1$ über $P_2$ auf den Wert $P_{3o}$ gestiegen ist. Die rapide Absenkung der Stellgrösse U verringert zwar den Druck von $P_{3o}$ zu $P_{3u}$, ohne dass jedoch hierdurch eine Spannkraftverringerung erzielt wird, weil das Spannfutter 3 infolge der Selbsthemmung sich nicht löst. Ein Lösen tritt erst dann auf, wenn der Druck weiter verringert wird, wobei diese Verringerung dem Druckverlauf pu entspricht. Entsprechend dieser Linie sinkt die Spannkraft F vom Punkt $P_{3u}$ über den Wert $P_{4u}$ auf den Wert $P_{5u}$, der bereits unter dem Sollwert $S_1$ liegt. Um diese Druckabsenkung zu beschleunigen, wird für den Absenkvorgang der Sollwert $S_1$ für die Spannkraft F auf den unteren Regelsollwert $S_{u1}$ verringert. Diese Verringerung des Sollwertes hätte das Erreichen des in Fig. 2 eingezeichneten Punktes $P_7$ zur Folge.

Durch das Regelgerät 15 wird die Druckabsenkung jedoch unterbrochen, sobald das Messelement 11 ein Unterschreiten des Sollwertes $S_1$ im Punkte $P_5$ feststellt. Demgemäss erfolgt bereits in diesem Punkt eine Erhöhung des Druckes (im Diagramm nach Fig. 3) von $P_{5u}$ nach $P_{5o}$. Dieser Druck liegt auf dem Druckverlauf po, der zu einer Erhöhung der Spannkraft F notwendig ist. Mit Hilfe der Stellgrösse U wird nunmehr die Spannkraft F wieder auf den Sollwert $S_1$ erhöht (Punkt $P_{6o}$ im Diagramm nach Fig. 3 bzw. $P_6$ im Diagramm nach Fig. 2).

Damit sind die Voraussetzungen für den zweiten Bearbeitungsvorgang geschaffen, der mit der Drehzahl n2 und gleicher Spannkraft F entsprechend dem Sollwert $S_1$ erfolgt. Auch während dieses Bearbeitungsvorganges wird durch die Stellgrösse U der Druck im Spannkrafterzeuger 5 regelmässig um den Wert $U_m$ abgesenkt und von unten her wieder dem Sollwert $S_1$ angenähert, wie dies die Fig. 2 zeigt.

Bei dem Bearbeitungsbeispiel nach Fig. 2 soll nunmehr das Werkstück W mit verminderter Spannkraft F bearbeitet werden. Dem zweiten Bearbeitungsvorgang schliesst sich somit eine Spannkraftabsenkung an. Zu diesem Zweck wird dem Regelgerät 15 ein neuer Sollwert $S_2$ vorgegeben, dem wiederum ein oberer Regelsollwert $S_{o2}$ und ein unterer Regelsollwert $S_{u2}$ zugeordnet sind, die hinsichtlich ihrer internen Toleranzvorgabe von der Toleranzvorgabe des ersten Sollwertes $S_1$ abweichen können.

Aufgrund der Verringerung des Sollwertes $S_2$ wird der Druck im Spannkrafterzeuger 5 mit Hilfe der Stellgrösse U abgesenkt. Die Spannkraft F fällt von P3' über P4' auf P5', wobei während der Spannkraftabsenkung als Sollwert kurzfristig der untere Regelsollwert $S_{u2}$ vorgegeben wird. Hierdurch wird erreicht, dass die Spannkraftabsenkung während des Umlaufens des Spannfutters 3 mit der Drehzahl n2 erzielt wird. Die Überwindung der Selbsthemmung (Hysterese) erfolgt hierbei entsprechen den Erläuterungen bei der Drehzahlabsenkung gemäss dem Diagramm in Fig. 3. Die Punkte P3' bis P6' entsprechen den Punkten $P_3$ bis $P_6$ in Fig. 3.

Sobald der Punkt P5' in Fig. 2 erreicht ist, erkennt das Regelgerät 15 eine Unterschreitung des Sollwertes $S_2$. Demgemäss erfolgt über die Stellgrösse U eine Anhebung des Druckes und damit der Spannkraft F. Es wiederholt sich sinngemäss der Vorgang wie beim ersten Bearbeitungsvorgang, wobei der dritte Bearbeitungsvorgang jedoch mit der Drehzahl n2 bei einer Spannkraft F mit dem Sollwert $S_2$ erfolgt.

Aus den voranstehenden Erläuterungen geht hervor, dass mit dem beschriebenen Verfahren die Spannkraft dem für die jeweilige Bearbeitungsaufgabe gewünschten Wert kurzfristig innerhalb geringer Toleranzen angepasst werden kann, und zwar unabhängig davon, ob das Spannfutter 3 stillsteht oder umläuft bzw. unabhängig von der jeweiligen Drehzahl n des Spannfutters 3.

*Bezugszeichenliste*

| | |
|---|---|
| 1 | Spindelgehäuse |
| 2 | Spindel |
| 3 | Spannfutter |
| 3a | Spannbacke |
| 3b | Futterkolben |
| 4 | Stange |
| 5 | Spannkrafterzeuger |
| 5a | Kolben |
| 6 | Druckmittelüberleitungsgehäuse |
| 7a | Druckmittelleitung |
| 7b | Druckmittelleitung |
| 8 | Pumpe |
| 8a | Motor |
| 9 | Druckmittelvorratsbehälter |
| 10 | Servoventil |
| 11 | Messelement |
| 12 | Sender |
| 13 | Empfänger |
| 14 | Signalleitung |

15    Regelgerät
15a   Sollwertsteller
15b   Verbindungsleitung
16    Steuerleitung

W     Werkstück
F     Spannkraft
n     Drehzahl
U     Stellgrösse
$U_m$   Verminderungsbetrag
$S_1$, $S_2$    Sollwert
$S_{o1}$, $S_{o2}$   oberer Regelsollwert
$S_{u1}$, $S_{u2}$   unterer Regelsollwert
po    Druckverlauf zum Spannen
pu    Druckverlauf zum Lösen

## Patentanspruch

Verfahren zur Regelung der Spannkraft (F) an umlaufenden Spanneinrichtungen (3) von Werkzeugmaschinen mit mehreren Spannelementen (3a), die von einem Spannkrafterzeuger (5) mit über ein Stellglied (10) veränderlicher Kraftabgabe über Getriebeelemente betätigbar sind, welche beim Aufbau und Abbau der Spannkraft (F) unterschiedlichen Kennlinie (pu bzw. po) folgen (Hysterese), und mit mindestens einem in der Spanneinrichtung (3) angeordneten Messelement (11) zur Ermittlung der jeweiligen, auf die Werkstücke (W) durch die Spannelemente (3a) ausgeübten Spannkraft (F), wobei der Messwert mittels einer Signalübertragung (13, 14) aus der Spanneinrichtung (3) auf die Regeleinrichtung (15) übertragbar ist, wobei in einem elektronischen Regelgerät (15) ein Sollwert ($S_1$, $S_2$) für die Spannkraft (F) und jeweils eine interne Toleranzvorgabe für einen oberen und einen unteren Regelungssollwert ($S_{o1}$, $S_{o2}$ bzw. $S_{u1}$, $S_{u2}$) vorgegeben werden und regelmässig ein Istwert-Sollwert-Vergleich durchgeführt wird, wobei in dem Regelgerät (15) weiterhin für die Veränderung der Kraftabgabe des Spannkrafterzeugers (5) durch das Stellglied (10) eine der Kraftabgabe voreilende Stellgrösse (U) digital erzeugt wird, deren Sprünge bei grosser Abweichung des Istwertes vom Sollwert gross und bei kleiner Abweichung klein sind und die bei Erreichen des Sollwertes ($S_1$ bzw. $S_2$) der Spannkraft (F) durch den Istwert um einen vorgegebenen Betrag ($U_m$) vermindert wird, so dass der Istwert der Spannkraft (F) in vorgegebenen Abständen regelmässig durch die Stellgrössenverminderung unter den Sollwert ($S_1$ bzw. $S_2$) abgesenkt und regelmässig wieder von unten auf den Sollwert ($S_1$ bzw. $S_2$) erhöht wird, und wobei bei einem Anstieg des Istwertes der Spannkraft (F) auf einen von der oberen Toleranzvorgabe ($S_{o1}$ bzw. $S_{o2}$) vorgegebenen Wert die Stellgrösse (U) zum Zwecke der Absenkung der Spannkraft (F) und zur Überwindung der Hysterese so lange unter Vorgabe des unteren Regelsollwertes ($S_{u1}$ bzw. $S_{u2}$) als neuer Sollwert abgesenkt wird, bis der Istwert der Spannkraft (F) auf einen Wert zwischen dem jeweiligen Sollwert ($S_1$ bzw. $S_2$) und der unteren Sollwertvorgabe ($S_{u1}$ bzw. $S_{u2}$) gefallen ist, wonach die Stellgrösse (U) wieder bis zur Erreichung des Sollwertes ($S_1$ bzw. $S_2$) durch den Istwert erhöht und regelmässig durch die Stellgrössenverminderung ($U_m$) abgesenkt wird.

## Revendication

Procédé d'ajustage de la force de serrage (F) sur des mandrins rotatifs (3) de machines-outils comportant plusieurs éléments de serrage (3a) susceptibles d'être actionnés par un générateur de force de serrage (5) transmettant une force variable au moyen d'un organe de réglage (10), par l'intermédiaire d'éléments d'engrenages, qui décrivent des lignes caractéristiques différentes (pa et po) (hystérisis), lors de la constitution et du relâchement de la force de serrage, et au moins un élément mesure (11) disposé sur le mandrin de serrage (3) pour la détermination de la force de serrage (F) exercée sur les pièces (W) par les éléments de serrage (3a), la valeur mesurée étant transmissible du mandrin de serrage (3) au dispositif de régulation (15) au moyen d'une transmission de signaux, selon lequel il est introduit dans un appareil de régulation électronique (15) une valeur de consigne pour la force de serrage (F) et une valeur interne de tolérance pour une valeur de consigne de régulation supérieure et inférieure ($S_{o1}$, $S_{o2}$ et $S_{u1}$, $S_{u2}$), il est régulièrement procédé à une comparaison valeur de consigne/valeur instantanée, il est, en outre, généré digitalement par l'organe de réglage (10) dans l'appareil de régulation (15) une grandeur de réglage (U) destinée à faire varier, en tant que signal précurseur, la force fournie par le générateur de force de serrage (5) dont les sauts sont importants lorsque l'écart entre la valeur instantanée et la valeur de consigne est grand, et sont faibles lorsque l'écart entre ces deux valeurs est faible, selon lequel, la grandeur de réglage est réduite d'un montant déterminée ($U_m$) lorsque la valeur instantanée atteint la valeur de consigne de la force de serrage (F), de telle sorte que la valeur instantanée de la force de serrage (F) est régulièrement abaissée à intervalles prédéterminés en-dessous de la valeur de consigne ($S_1$ ou $S_2$) par suite de la réduction de la grandeur de réglage et est régulièrement relevée du bas au niveau de la valeur de consigne ($S_1$ ou $S_2$) et selon lequel, lors d'un accroissement de la valeur instantanée de la force de serrage (F) à une valeur pré-établie par la limite de tolérance supérieure ($S_{o1}$ ou $S_{o2}$), la grandeur de serrage (U) est, pour réduire l'effort de serrage (F) et supprimer l'hystérisis, réduite en prenant comme nouvelle valeur de consigne la limite inférieure de la tolérance de consigne ($S_{u1}$ ou $S_{u2}$), jusqu'à ce que la valeur instantanée de la force de serrage (F) soit retombée à une valeur comprise entre la tolérance de consigne ($S_1$ ou $S_2$) et la valeur inférieure de consigne tolérée ($S_{u1}$ ou $S_{u2}$) après quoi la grandeur de réglage (U) est à nouveau augmentée jusqu'à ce que la valeur instantanée ait atteint la valeur de consigne et elle est régulièrement réduite par suite de la diminution de la grandeur de réglage.

## Claim

A method of controlling the clamping force (F) of rotating clamping means (3) of machine tools, such means having a number of clamping elements (3a) actuatable by way of transmission elements by a clamping-force-producer (5) whose output can be varied by means of control member (10), the transmission elements having different characteristics (pu and po) associated with the growth and decay respectively of the clamping force (F) (hysteresis), at least one measuring element (11) being disposed in the clamping means (3) to determine the clamping force (F) applied to the workpiece (W) by the clamping elements (3), the measured value being transmissible by means of a signal transmission facility (13, 14) from the clamping means (3) through to the control means (15), there being input in an electronic controller (15), a set value ($S_1$, $S_2$) for the clamping force (F) and an internal tolerance allowance for a top control set value ($S_{o1}$, $S_{o2}$) and for a bottom control set value ($S_{u1}$, $S_{u2}$), a comparison between actual values and set values being carried out reguarly, a manipulated variable (U) which leads on the force output being produced digitally in the controller (15) for variation of the force output of the clamping-force-producer (5) by the control member (10), the jumps of the manipulated variable (U) being large in the event of a large deviation of the actual value from the set value and being small in the event of such deviation being small, the manipulated variable (U) being so reduced by a predetermined amount ($U_m$) when the actual value reaches the set value ($S_1$, $S_2$ respectively) of the clamping force (F) that the actual value of the clamping force (F) is at predetermined intervals reduced regularly by the reduction of the manipulated variable below the set value ($S_1$, $S_2$ respectively) and is regularly increased again upwardly to the set value ($S_1$, $S_2$ respectively), and in response to the actual value of the clamping force (F) rising to a value predetermined by the top tolerance allowance ($S_{o1}$, $S_{o2}$ respectively), the manipulated variable (U) is reduced, in order to reduce the clamping force (F) and to overcome the hysteresis, the bottom set value ($S_{u1}$, $S_{u2}$ respectively) being input as a new set value until the actual value of the clamping force (F) has dropped to a value between the associated set value ($S_1$, $S_2$ respectively) and the bottom set value ($S_{u1}$, $S_{u2}$ respectively), whereafter the manipulated variable (U) is increased until the actual value reaches the set value ($S_1$, $S_2$ respectively) and is regularly reduced by the manipulated variable reduction ($U_m$).

# Fig. 1

Fig. 2

0 213 218

Spannkraft

$S_{o1}$
$S_1$
$S_{u1}$

$P_{3u}$  $P_{3o}$
$P_2$
$P_{4u}$  $P_1$
$P_{5u}$  $P_{6o}$
  $P_{5o}$
$P_{7u}$

$-\varrho$
$+\varrho$

$P_u$

$P_o$

$\alpha$

$\alpha$ - Keilwinkel

$\varrho$ - Reibungswinkel

Druck

Fig. 3

0 213 218